# EUROPÄISCHE PATENTSCHRIFT

(11) **EP 3 510 225 B1**
(45) Veröffentlichungstag und Bekanntmachung des Hinweises auf die Patenterteilung: **25.08.2021**
(21) Anmeldenummer: 17767770.5
(22) Anmeldetag: 05.09.2017
(51) Int. Cl.: E05F 11/48, E05F 15/689, E05F 15/697, E05F 11/38

(54) **ANTRIEBSVORRICHTUNG FÜR EINEN FENSTERHEBER, MIT EINEM ANSCHLAGSRING FÜR EINE SEILTROMMEL**
DRIVE ASSEMBLY FOR A WINDOW LIFTER HAVING A STOP RING FOR A CABLE DRUM
DISPOSITIF D'ENTRAÎNEMENT POUR UN LÈVE-VITRE, COMPRENANT UNE BAGUE DE BUTÉE POUR UN TAMBOUR DE CÂBLE

(30) Priorität: 06.09.2016 DE 102016216877
(43) Veröffentlichungstag der Anmeldung: 17.07.2019
(73) Patentinhaber: Brose Fahrzeugteile SE & Co. Kommanditgesellschaft, Bamberg, 96052 Bamberg (DE)
(72) Erfinder: KALB, Roland, 96269 Rossach (DE); LANGE, Gabriele, 96364 Marktrodach (DE)
(74) Vertreter: Maikowski & Ninnemann Patentanwälte Partnerschaft mbB
(86) Internationale Anmeldenummer: PCT/EP2017/072273
(87) Internationale Veröffentlichungsnummer: WO 2018/046505

(56) Entgegenhaltungen:
- EP-A1- 1 347 139
- DE-A1-102007 046 885
- KR-A- 20130 073 580
- US-A1- 2003 160 124
- US-A1- 2010 043 294
- US-B1- 7 059 085

## Beschreibung

Die Erfindung betrifft eine Antriebsvorrichtung für eine Verstelleinrichtung zum Verstellen eines Fahrzeugteils, insbesondere eines Fensterhebers, nach dem Oberbegriff des Anspruchs 1.

Eine derartige Antriebsvorrichtung umfasst ein Trägerelement mit einer Öffnung und eine Seiltrommel, die mit einem Abschnitt in die Öffnung des Trägerelements derart eingesetzt ist, dass sich der Abschnitt zumindest teilweise durch die Öffnung hindurch erstreckt. An einer ersten Seite des Trägerelements ist ein Seilausgangsgehäuse angeordnet, das ein die Seiltrommel um eine Drehachse drehbar an der ersten Seite des Trägerelements lagerndes Lagerelement aufweist.

Eine derartige Antriebsvorrichtung kann insbesondere Bestandteil einer Fensterhebereinrichtung sein und somit zum Verstellen einer Fensterscheibe dienen. Eine solche Antriebsvorrichtung kann aber auch zum Verstellen eines anderen Verstellelements, beispielsweise eines Schiebedach oder dergleichen, in einem Fahrzeug dienen.

Bei einem Fensterheber können beispielsweise an einem Aggregateträger eines Türmoduls ein oder mehrere Führungsschienen angeordnet sein, an denen je ein mit einer Fensterscheibe gekoppelter Mitnehmer geführt ist. Der Mitnehmer ist über ein biegeschlaffes, zur Übertragung von (ausschließlich) Zugkräften ausgelegtes Zugseil mit der Antriebsvorrichtung gekoppelt, wobei das Zugseil derart an der Seiltrommel angeordnet ist, dass sich bei einer Drehbewegung der Seiltrommel das Zugseil mit einem Ende auf die Seiltrommel aufwickelt und mit einem anderen Ende von der Seiltrommel abwickelt. Es kommt somit zu einem Verschieben einer durch das Zugseil gebildeten Seilschlaufe und dem entsprechend zu einem Bewegen des Mitnehmers entlang der jeweils zugeordneten Führungsschiene. Angetrieben durch die Antriebsvorrichtung kann somit die Fensterscheibe verstellt werden, beispielsweise um eine Fensteröffnung an einer Fahrzeugseitentür freizugeben oder zu schließen.

Eine solche Antriebsvorrichtung muss generell dazu ausgestaltet sein, ein hinreichend großes Drehmoment zum Verstellen der Fensterscheibe zur Verfügung zu stellen. Die Antriebsvorrichtung soll dabei einen kleinen Bauraum aufweisen können, soll einfach beispielsweise an einem zugeordneten Trägerelement, beispielsweise dem Aggregateträger eines Türmoduls, zu montieren sein und soll im Betrieb ein günstiges Betriebsverhalten bei geringer Geräuschentwicklung beispielsweise an einem Türmodul einer Fahrzeugtür aufweisen.

Bei einem aus der DE 10 2004 044 863 A1 bekannten Antrieb für eine Verstelleinrichtung in einem Kraftfahrzeug ist eine Seiltrommel auf einem Lagerdom eines Antriebsgehäuses angeordnet, wobei das Antriebsgehäuse über ein Befestigungselement in Form einer Schraube mit einem Trägerelement in Form eines Aggregateträgers verbunden ist.

Aus der US 2003/0160124 A1 ist ein Antrieb für einen Seilfensterheber bekannt, bei dem eine Seiltrommel in einem Seilausgangsgehäuse eingefasst und an einem Trägerelement gelagert ist.

Bei einem aus der DE 10 2007 046 885 A1 bekannten Fensterheberantrieb ist eine Seiltrommel an einem Lagerelement gelagert, das wiederum an einem Trägerelement abgestützt ist. Eine Lagerung der Seiltrommel erfolgt somit über das an dem Trägerelement abgestützte Lagerelement.

Die US 7,059,085 beschreibt einen Fenstertreiberantrieb, bei dem eine Seiltrommel an einem Trägerelement angeordnet ist, wobei eine mit der Seiltrommel verbundene Welle das Trägerelement durchgreift.

Die EP 1 347139 A1 beschreibt einen Fensterheberantrieb, bei dem eine Seiltrommel in einem Seilausgangsgehäuse eingefasst ist und mit einem Abschnitt eine Öffnung eines Trägerelements durchgreift, wobei die Seiltrommel einen Durchmesser aufweist, der größer als der Durchmesser der Öffnung an dem Trägerelement ist.

Die KR 20130073580 A offenbart einen Fensterheberantrieb mit einem Seiltrommel und einer Motoreinheit.

Aufgabe der vorliegenden Erfindung ist es, eine Antriebsvorrichtung zur Verfügung zu stellen, die insbesondere einfach zu montieren ist und ein günstiges Betriebsverhalten im Betrieb aufweisen kann.

Diese Aufgabe wird durch einen Gegenstand mit den Merkmalen des Anspruchs 1 gelöst. Demnach ist an dem Abschnitt der Seiltrommel zumindest ein radial zur Drehachse von dem Abschnitt vorspringendes Auflageelement angeordnet, das eine Gegenauflage an einem die Öffnung des Trägerelements umgebenden Rand des Trägerelements radial derart übergreift, dass die Gegenauflage ein Hindurchbewegen der Seiltrommel durch die Öffnung des Trägerelements sperrt.

Die Seiltrommel durchgreift mit einem Abschnitt die Öffnung des Trägerelements und ragt zumindest teilweise mit dem Abschnitt durch die Öffnung des Trägerelements hindurch. Die Seiltrommel kommt hierbei mit einem eine Seilrille tragenden Körper an der ersten Seite des Trägerelements zu liegen und ist durch das Seilausgangsgehäuse umgriffen, sodass die Seiltrommel über das Seilausgangsgehäuse an dem Trägerelement gehalten ist.

Zur Montage der Seiltrommel an dem Trägerelement wird die Seiltrommel zusammen mit dem Seilausgangsgehäuse an das Trägerelement angesetzt. Durch Verbinden des Seilausgangsgehäuses mit dem Trägerelement wird somit eine vormontierte Einheit geschaffen, die sodann durch Ansetzen eines Antriebsgehäuses von der anderen Seite des Trägerelements komplettiert werden kann, ohne dass besondere Vorkehrungen getroffen werden müssen, die Seiltrommel in Position an der ersten Seite des Trägerelements zu halten. Insbesondere kann die Seiltrommel nach dem Ansetzen an das Trägerelement nicht durch die Öffnung in dem Trägerelement hindurchrutschen, sodass die Montage der Seiltrommel an dem Trägerelement sich einfach gestaltet und auch die Komplettierung durch ein Antriebsgehäuse von der anderen Seite in einfacher Weise vorgenommen werden kann.

Die Gegenauflage an dem Trägerelement ist vorzugsweise durch einen die Öffnung des Trägerelements umgebenden Auflagering gebildet. Der Auflagering kann hierbei von einem umfänglichen Rand, beispielsweise in Form eines die Öffnung umfänglich umgebenden Bundes, radial nach innen vorspringen und somit eine Auflage für das zumindest eine Auflageelement an dem Abschnitt der Seiltrommel schaffen. Der Durchmesser des Auflagerings ist kleiner als der Durchmesser eines die Auflageelemente einhüllenden Kreises, sodass die Auflageelemente ein Durchrutschen der Seiltrommel durch die Öffnung des Trägerelements verhindern.

Die Seiltrommel weist eine Mehrzahl von umfänglich an dem Abschnitt zueinander beabstandeten Auflageelementen auf. Die Auflageelemente können hierbei regelmäßig zueinander verteilt an dem Abschnitt angeordnet sein.

In einer vorteilhaften Ausgestaltung ist das Seilausgangsgehäuse mit dem Trägerelement über eine Rastverbindung formschlüssig verbunden und wird auf diese Weise - zumindest in einer Vormontagestellung nach Ansetzen des Seilausgangsgehäuses an das Trägerelement, aber vor Komplettieren der Antriebsvorrichtung durch ein Antriebsgehäuse zum Aufnehmen einer Motoreinheit - an dem Trägerelement gehalten. Bereits in der Vormontagestellung ist das Seilausgangsgehäuse somit an dem Trägerelement gesichert und kann nicht, nach Ansetzen an das Trägerelement, von dem Trägerelement abfallen. Über das Seilausgangsgehäuse ist auch die Seiltrommel an dem Trägerelement gehalten, sodass eine vormontierte Einheit für die weitere Montage geschaffen wird.

Über die an dem Lagerelement des Seilausgangsgehäuses gelagerte Seiltrommel können im Betreib der Antriebsvorrichtung Drehmomente auf das Seilausgangsgehäuse wirken. Es ist somit zu gewährleisten, dass das Seilausgangsgehäuse sich im Betrieb der Antriebsvorrichtung nicht rotatorisch zu dem Trägerelement bewegen kann. Es ist somit eine Drehsicherung zwischen dem Seilausgangsgehäuse und dem Trägerelement vorzusehen.

Hierzu kann beispielsweise der zumindest eine Gehäuseabschnitt, über den der Boden des Seilausgangsgehäuses mit dem Trägerelement verbunden ist, drehfest an dem Trägerelement festgelegt sein. So kann an einem Fußabschnitt des zumindest einen Gehäuseabschnitts oder dem Trägerelement ein Formschlusselement vorgesehen sein, das bei montiertem Seilausgangsgehäuse mit einer Formschlussöffnung an dem jeweils anderen Bauteil (also dem Trägerelement oder dem Fußabschnitt des zumindest einen Gehäuseabschnitts) in Eingriff steht. Über den Eingriff des Formschlusselements in die Formschlussöffnung wird somit eine Drehsicherung zwischen dem Seilausgangsgehäuse und dem Trägerelement bereitgestellt. Dadurch, dass der zumindest eine Gehäuseabschnitt radial zu der Drehachse beabstandet ist und somit radial außerhalb der Drehachse, um die die Seiltrommel drehbar ist, wirkt, können Drehmomente in günstiger Weise aufgefangen werden.

Über den zumindest einen Gehäuseabschnitt ist das Seilausgangsgehäuse hierbei axial an dem Trägerelement abgestützt und - durch axiales Verspannen des Seilausgangsgehäuses mit dem Antriebsgehäuse - auch gegenüber dem Trägerelement verspannt. Die Spannkraft des Befestigungselements wird über den zumindest einen Gehäuseabschnitt an dem Trägerelement abgestützt.

Über den Fußabschnitt an dem zumindest einen Gehäuseabschnitt des Seilausgangsgehäuses kann hierbei auch die Rastverbindung in der Vormontagestellung hergestellt werden. So kann vorgesehen sein, dass in der Vormontagestellung ein jedes Formschlusselement rastend in der zugeordneten Formschlussöffnung gehalten ist, beispielsweise durch Vorsehen einer Rastnase an dem Formschlusselement oder der Formschlussöffnung und eine zugeordnete Rastausnehmung an dem jeweils anderen Bauteil. Durch Ansetzen des Seilausgangsgehäuses mit seinen Fußabschnitten an das Trägerelement und durch Ineingriffbringen der Formschlusselemente mit den Formschlussöffnungen wird somit eine rastende, formschlüssige Verbindung hergestellt, die das Seilausgangsgehäuse bereits in der vormontierten Stellung an dem Trägerelement hält.

Die Antriebsvorrichtung weist ein durch eine Motoreinheit antreibbares Antriebsrad und ein an einer von der ersten Seite abgewandten, zweiten Seite des Trägerelements angeordnetes Antriebsgehäuse, das ein weiteres, zweites Lagerelement zum drehbaren Lagern des Antriebsrads um die Drehachse aufweist, auf. Das Seilausgangsgehäuse ist somit an die erste Seite des Trägerelements angesetzt und lagert dort die Seiltrommel. An die abgewandte, zweite Seite des Trägerelements wird das Antriebsgehäuse angesetzt und lagert dort das Antriebsrad.

Im Betrieb sind das Antriebsrad und die Seiltrommel drehfest miteinander verbunden und werden zusammen verdreht, um Drehmomente von der Motoreinheit hin zu der Seiltrommel zu übertragen und dadurch ein Verstellelement zu bewegen. Die drehfeste Verbindung zwischen der Seiltrommel und dem Antriebsrad ist durch einen Eingriff von Formschlusselementen ineinander hergestellt, z.B. einen Verzahnungseingriff, für den eine Verzahnung der Seiltrommel in eine zugeordnete Verzahnung des Antriebsrads eingreift und dadurch eine drehfest Verbindung herstellt. Die Seiltrommel weist ein Hohlrad beispielsweise mit einer Innenverzahnung auf, das auf ein Verbindungsrad beispielsweise mit einer Außenverzahnung des Antriebsrads aufgesetzt wird. Das Hohlrad bildet den Abschnitt aus, der sich durch die Öffnung des Trägerelements hindurch erstreckt und an dem das zumindest eine Auflageelement gebildet ist, sodass sich die Seiltrommel mit dem das Hohlrad verwirklichenden Abschnitt durch die Öffnung hin zum Antriebsrad erstreckt und auf der dem Antriebsgehäuse zugeordneten, zweiten Seite des Trägerelements mit dem Antriebsrad gekoppelt ist.

In einer Ausgestaltung sind das Seilausgangsgehäuse und das Antriebsgehäuse über ein zwischen dem Lagerelement des Seilausgangsgehäuses und dem Lagerelement des Antriebsgehäuses wirkendes Befestigungselement aneinander befestigt sind. Dadurch, dass das Seilausgangsgehäuse auf der ersten Seite des Trägerelements und das Antriebsgehäuse auf der anderen, zweiten Seite des Trägerelements über ein (einziges) Befestigungselement, das zwischen den Lagerelementen wirkt, aneinander befestigt und somit an dem Trägerelement festgelegt sind, ergibt sich eine sehr einfache Montage. Insbesondere kann zur Montage das Seilausgangsgehäuse einerseits und das Antriebsgehäuse andererseits an das Trägerelement angesetzt werden, um sodann das Seilausgangsgehäuse und das Antriebsgehäuse über das Befestigungselement, beispielsweise ein Schraubelement, miteinander zu verbinden, vorzugsweise axial zueinander zu verspannen, sodass das Trägerelement zwischen dem Seilausgangsgehäuse und dem Antriebsgehäuse eingeklemmt ist.

Das Befestigungselement kann hierbei von einem der Lagerelemente in das andere der Lagerelemente eingreifen und die Lagerelemente dadurch miteinander verbinden. Über die Lagerelemente werden das Seilausgangsgehäuse einerseits und das Antriebsgehäuse andererseits somit zueinander festgelegt.

Die Seiltrommel ist, bei betriebsgemäßer Anordnung in einem Fahrzeug beispielsweise an einer Fahrzeugseitentür, z.B. in einem Nassraum angeordnet, während die Motoreinheit der Antriebsvorrichtung in einem Trockenraum gelegen ist. Die Trennung zwischen dem Nassraum und dem Trockenraum kann hierbei durch das Trägerelement, beispielsweise ein aus Kunststoff hergestellter Aggregateträger eines Türmoduls, bereitgestellt werden. Durch die Montage des Seilausgangsgehäuses einerseits des Trägerelements und das Antriebsgehäuse andererseits des Trägerelements und der Verbindung über ein (einziges) zentrales Befestigungselement kann auf einfache Weise eine solche Nass-Trockenraum-Trennung erhalten werden, ohne dass diese Nass-Trockenraum-Trennung durch von einer Seite zur anderen Seite greifende Befestigungselemente beeinträchtigt ist.

Das Lagerelement des Seilausgangsgehäuses dient zur Lagerung der Seiltrommel und ist hierzu als zylindrischer Lagerdom, der von einem Boden des Seilausgangsgehäuses vorsteht, ausgebildet. Zudem kann das Lagerelement des Antriebsgehäuses, das zum Lagern des Antriebsrads auf der von der Seiltrommel abgewandten Seite des Trägerelements dient, als zylindrischer Lagerdom an dem Antriebsgehäuse ausgebildet sein. Über das Befestigungselement werden die Lagerdome axial zueinander verspannt, sodass darüber das Seilausgangsgehäuse einerseits und des Antriebsgehäuses andererseits an dem Trägerelement festgelegt werden.

In einer Ausgestaltung kann das Antriebsgehäuse zumindest eine radial zur Drehachse beabstandete Befestigungseinrichtung, beispielsweise eine Befestigungsbuchse mit einer eingeformten Formschlussöffnung, aufweisen. Über die Befestigungseinrichtung kann auch das Antriebsgehäuse in drehfester Weise an dem Trägerelement festgelegt sein, sodass um die Drehachse wirkende Drehmomente aufgefangen und abgeleitet werden können und insbesondere nicht zu einem Verdrehen des Antriebsgehäuses an dem Trägerelement führen können.

Zur Drehsicherung des Antriebsgehäuses an dem Trägerelement greift vorzugsweise ein Formschlusselement, das an dem Trägerelement oder der Befestigungseinrichtung des Antriebsgehäuses angeordnet ist, in eine Formschlussöffnung, die an dem jeweils anderen Bauteil (also der Befestigungseinrichtung des Antriebsgehäuses oder dem Trägerelement) gebildet ist, formschlüssig ein. Über den formschlüssigen Eingriff können Drehmomente aufgefangen und abgeleitet werden, sodass das Antriebsgehäuse in drehfester Weise an dem Trägerelement festgelegt ist.

An dem Formschlusselement kann hierbei ein Dämpfungselement angeordnet sein, das eine elastische, dämpfende Zwischenlage zwischen dem Formschlusselement und der Wandung der Formschlussöffnung bildet. Auf diese Weise kann eine akustische Entkopplung im Betrieb zwischen dem Antriebsgehäuse und dem Trägerelement erreicht werden.

Es können somit sowohl das Seilausgangsgehäuse als auch das Antriebsgehäuse in formschlüssiger Weise drehfest an dem Trägerelement gesichert sein. Dieser Formschluss wird bei Ansetzen des Seilausgangsgehäuses an die erste Seite des Trägerelements und bei Ansetzen des Antriebsgehäuses an die zweite Seite des Trägerelements selbsttätig hergestellt, ohne dass hierzu gesonderte Montageschritte erforderlich sind und weitere Befestigungselemente, beispielsweise in Form von Schraubelementen, angebracht werden müssen. Das (axiale) Festlegen des Seilausgangsgehäuses und des Antriebsgehäuses zueinander erfolgt vorzugsweise allein über das zentral zwischen den Lagerelementen des Seilausgangsgehäuses und des Antriebsgehäuses wirkende Befestigungselement.

Der der Erfindung zugrunde liegende Gedanke soll nachfolgend anhand der in den Figuren dargestellten Ausführungsbeispiele näher erläutert werden. Es zeigen:
- Fig. 1A: eine Explosionsansicht eines Ausführungsbeispiels einer Antriebsvorrichtung;
- Fig. 1B: die Explosionsansicht gemäß Fig. 1A, aus anderer Perspektive;
- Fig. 2: eine Ansicht eines Seilausgangsgehäuses vor Ansetzen an ein Trägerelement;
- Fig. 3: eine andere Ansicht des Seilausgangsgehäuses vor Ansetzen an das Trägerelement;
- Fig. 4A: eine Ansicht des Seilausgangsgehäuses an dem Trägerelement;
- Fig. 4B: eine ausschnittsweise vergrößerte Ansicht der Anordnung gemäß Fig. 4A;
- Fig. 5: eine gesonderte Ansicht des Seilausgangsgehäuses, schräg von unten;
- Fig. 6: eine Draufsicht auf das Seilausgangsgehäuse;
- Fig. 7: eine Querschnittansicht entlang der Linie A-A gemäß Fig. 6;
- Fig. 8: die Querschnittansicht gemäß Fig. 7, bei an das Trägerelement angesetztem Seilausgangsgehäuse;
- Fig. 9: eine Querschnittansicht entlang der Linie B-B gemäß Fig. 4A, vor Verspannen des Seilausgangsgehäuses mit einem Antriebsgehäuse über ein Befestigungselement; und
- Fig. 10: eine schematische Ansicht einer Verstelleinrichtung eines Fahrzeugs in Form eines Fensterhebers.

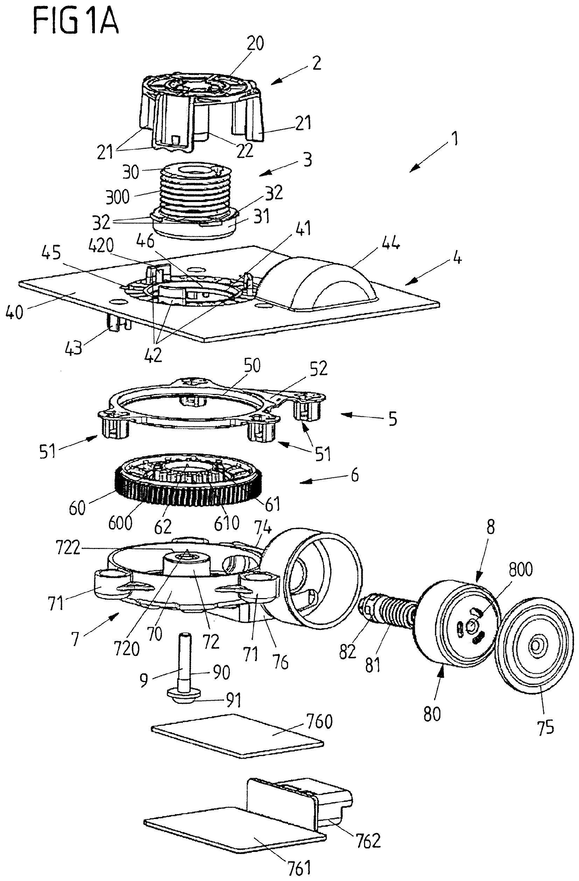

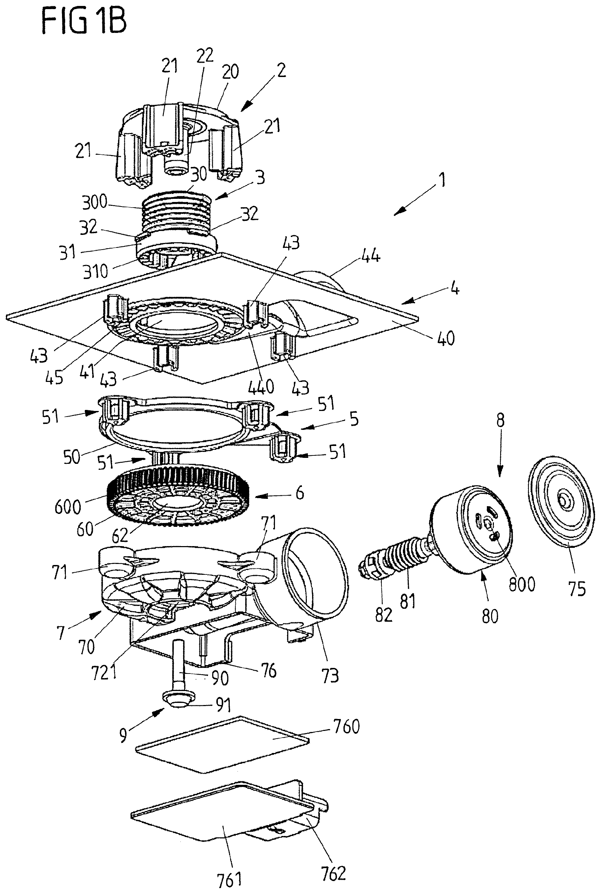

Fig. 1A, 1B bis 9 zeigen ein Ausführungsbeispiel einer Antriebsvorrichtung 1, die beispielsweise als Antrieb in einer Verstelleinrichtung zum Verstellen einer Fensterscheibe beispielsweise einer Fahrzeugseitentür Verwendung finden kann.

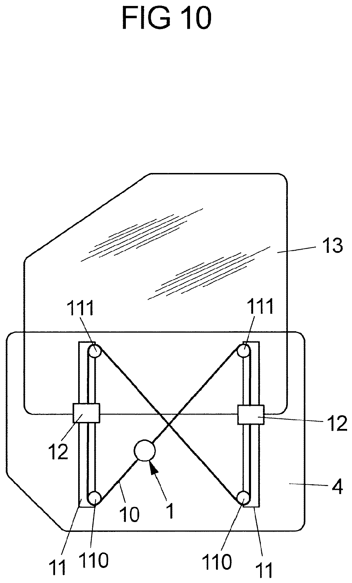

Eine solche Verstelleinrichtung in Form eines Fensterhebers, beispielhaft dargestellt in Fig. 10, weist beispielsweise ein Paar von Führungsschienen 11 auf, an denen jeweils ein Mitnehmer 12, der mit einer Fensterscheibe 13 gekoppelt ist, verstellbar ist. Jeder Mitnehmer 12 ist über ein Zugseil 10, das zur Übertragung von (ausschließlich) Zugkräften ausgebildet ist, mit einer Antriebsvorrichtung 1 gekoppelt, wobei das Zugseil 10 eine geschlossene Seilschlaufe ausbildet und dazu mit seinen Enden mit einer Seiltrommel 3 (siehe zum Beispiel Fig. 1A und 1B) der Antriebsvorrichtung 1 verbunden ist. Das Zugseil 10 erstreckt sich von der Antriebsvorrichtung 1 um Umlenkrollen 110 an den unteren Enden der Führungsschienen 11 hin zu den Mitnehmern 12 und von den Mitnehmern 12 um Umlenkrollen 111 an den oberen Enden der Führungsschienen 11 zurück zur Antriebsvorrichtung 10.

Im Betrieb treibt eine Motoreinheit der Antriebsvorrichtung 1 die Seiltrommel 3 derart an, dass das Zugseil 10 mit einem Ende auf die Seiltrommel 3 aufgewickelt und mit dem anderen Ende von der Seiltrommel 3 abgewickelt wird. Hierdurch verschiebt sich die durch das Zugseil 10 gebildete Seilschlaufe ohne Änderung der frei erstreckten Seillänge, was dazu führt, dass die Mitnehmer 12 an den Führungsschienen 11 gleichgerichtet bewegt und dadurch die Fensterscheibe 13 entlang der Führungsschienen 11 verstellt wird.

Der Fensterheber ist bei dem Ausführungsbeispiel gemäß Fig. 10 an einem Aggregateträger 4 eines Türmoduls angeordnet. Der Aggregateträger 4 kann beispielsweise an einem Türinnenblech einer Fahrzeugtür festzulegen sein und stellt eine vormontierte Einheit dar, die vormontiert mit an dem Aggregateträger 4 angeordnetem Fensterheber an der Fahrzeugtür montiert werden kann.

Die Antriebsvorrichtung 1 des Ausführungsbeispiels gemäß Fig. 1A, 1B bis 9 ist an einem Flächenabschnitt 40 eines z.B. durch einen Aggregateträger verwirklichten Trägerelements 4 angeordnet und weist ein an einer ersten Seite des Trägerelements 4 angeordnetes Seilausgangsgehäuse 2 und ein an einer von der ersten Seite abgewandten, zweiten Seite des Trägerelements 4 angeordnetes Antriebsgehäuse 7 auf. Das Seilausgangsgehäuse 2 dient dazu, die Seiltrommel 3 an dem Trägerelement 4 zu lagern, während das Antriebsgehäuse 7 unter anderem ein Antriebsrad 6 einfasst, das über eine Motoreinheit 8 angetrieben werden kann und mit der Seiltrommel 3 in Verbindung steht, sodass durch Verdrehen des Antriebsrads 6 die Seiltrommel 3 angetrieben werden kann.

Die Seiltrommel 3 an der ersten Seite des Trägerelements 4 ist, bei bestimmungsgemäßer Anordnung beispielsweise an einer Fahrzeugtür eines Fahrzeugs, in einem Nassraum der Fahrzeugtür angeordnet. Das Antriebsgehäuse 7 befindet sich demgegenüber im Trockenraum der Fahrzeugtür. Die Trennung zwischen Nassraum und Trockenraum wird durch das Trägerelement 4 hergestellt, und entsprechend ist die Schnittstelle zwischen dem Antriebsrad 6 und der Seiltrommel 3 feuchtigkeitsdicht abzudichten, sodass keine Feuchtigkeit von dem Nassraum in den Trockenraum gelangen kann.

Das Seilausgangsgehäuse 2 weist einen Boden 20, ein zentral von dem Boden 20 vorstehendes, zylindrisches Lagerelement 22 in Form eines Lagerdoms und radial zu dem Lagerelement 22 beabstandete Gehäuseabschnitte 21 in Form von parallel zu dem zylindrischen Lagerelement 22 erstreckten Gehäusestegen auf. An dem Lagerelement 22 ist die Seiltrommel 3 drehbar gelagert und dabei derart von dem Seilausgangsgehäuse 2 eingefasst, dass die Seiltrommel 3 an dem Trägerelement 4 gehalten ist.

Die Seiltrommel 3 weist einen Körper 30 und, an der umfänglichen Mantelfläche des Körpers 30, eine in den Körper 30 eingeformte Seilrille 300 zur Aufnahme des Zugseils 10 auf. Mit einem Hohlrad 31 ist die Seiltrommel 3 in eine Öffnung 41 des Trägerelements 4 eingesetzt und mit dem Antriebsrad 6 drehfest verbunden, sodass eine Drehbewegung des Antriebsrads 6 zu einer Drehbewegung der Seiltrommel 3 führt.

Das Antriebsgehäuse 7 ist unter Zwischenlage eines Dichtelements 5 an die andere, zweite Seite des Trägerelements 4 angesetzt und weist einen Gehäusetopf 70 mit einem zentral darin ausgebildeten Lagerelement 72 in Form eines zylindrischen Lagerdoms auf, das eine Öffnung 62 des Antriebsrads 6 durchgreift und das Antriebsrad 6 auf diese Weise drehbar lagert. An den Gehäusetopf 70 schließt ein Schneckengehäuse 74 an, in dem eine Antriebsschnecke 81 einliegt, die drehfest mit einer Antriebswelle 800 eines Elektromotors 80 der Motoreinheit 8 verbunden ist und über eine Schneckenverzahnung mit einer Außenverzahnung 600 eines Körpers 60 des Antriebsrads 6 in Verzahnungseingriff steht. Die Antriebswelle 800 ist über ein Lager 82 an ihrem dem Elektromotor 80 abgewandten Ende in dem Schneckengehäuse 74 gelagert. Der Elektromotor 80 liegt hierbei in einem Motortopf 73 des Antriebsgehäuses 7 ein, der über einen Gehäusedeckel 75 nach außen hin verschlossen ist.

Das Antriebsgehäuse 7 weist zudem ein Elektronikgehäuse 76 auf, in dem eine Platine 760 mit einer darauf angeordneten Steuerelektronik eingefasst ist. Das Elektronikgehäuse 76 ist nach außen hin über eine Gehäuseplatte 761 mit einem daran angeordneten Steckverbinder 762 zur elektrischen Anbindung der Elektronik der Platine 760 verschlossen.

Das Antriebsrad 6 weist, axial von dem Körper 60 vorstehend, ein Verbindungsrad 61 mit einer daran geformten Außenverzahnung 610 auf, das mit dem Hohlrad 31 der Seiltrommel 3 derart in Eingriff steht, dass eine Innenverzahnung 310 des Hohlrads 31 (siehe zum Beispiel Fig. 1B) in Verzahnungseingriff mit der Außenverzahnung 610 des Verbindungsrads 61 steht. Auf diese Weise sind das Antriebsrad 6 und die Seiltrommel 3 drehfest miteinander verbunden, sodass die Seiltrommel 3 durch Antreiben des Antriebsrads 6 an dem Trägerelement 4 verdrehbar ist.

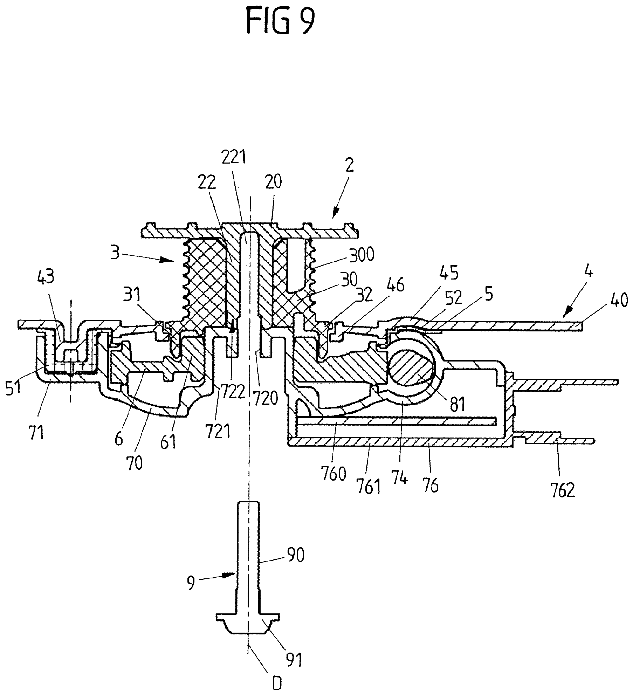

Zur Montage der Antriebsvorrichtung 1 wird das Seilausgangsgehäuse 2 einerseits an das Trägerelement 4 und das Antriebsgehäuse 7 andererseits an das Trägerelement 4 angesetzt. Die Befestigung an dem Trägerelement 4 erfolgt dann dadurch, dass ein Befestigungselement 9 in Form eines Schraubelements in eine Eingriffsöffnung 721 unterseitig des Antriebsgehäuses 7 eingesetzt wird derart, dass sich das Befestigungselement 9 durch eine Öffnung 720 in dem Lagerelement 72 des Antriebsgehäuses 7 hindurch erstreckt (siehe Fig. 9) und zentral in eine Öffnung 221 innerhalb des Lagerelements 22 des Seilausgangsgehäuses 2 eingreift. Über das Befestigungselement 9 werden das Seilausgangsgehäuse 2 und das Antriebsgehäuse 7 axial an den Lagerelementen 22, 72 zueinander verspannt und darüber an dem Trägerelement 4 festgelegt.

Innerhalb der Öffnung 221 des Lagerelements 22 des Seilausgangsgehäuses 2 kann ein Gewinde zum Aufnehmen des Befestigungselements 9 geformt sein. Denkbar und möglich ist aber auch, dass das Befestigungselement 9 selbstschneidend in die Öffnung 221 eingeschraubt wird.

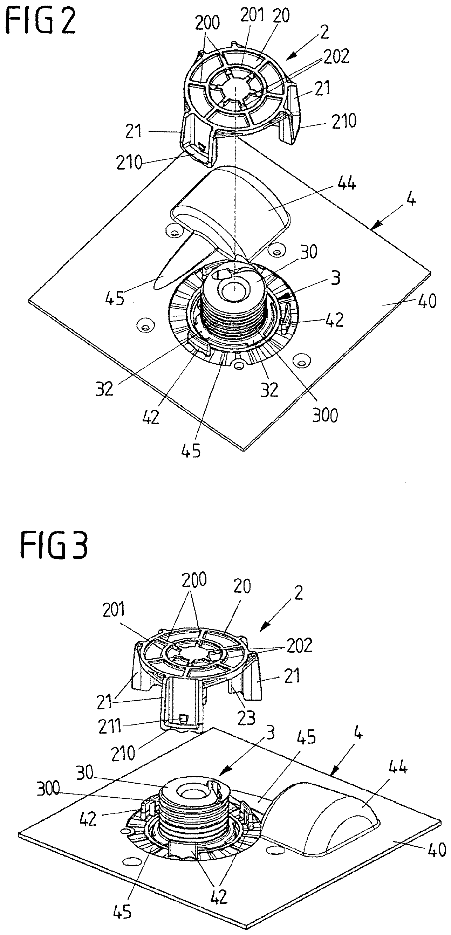

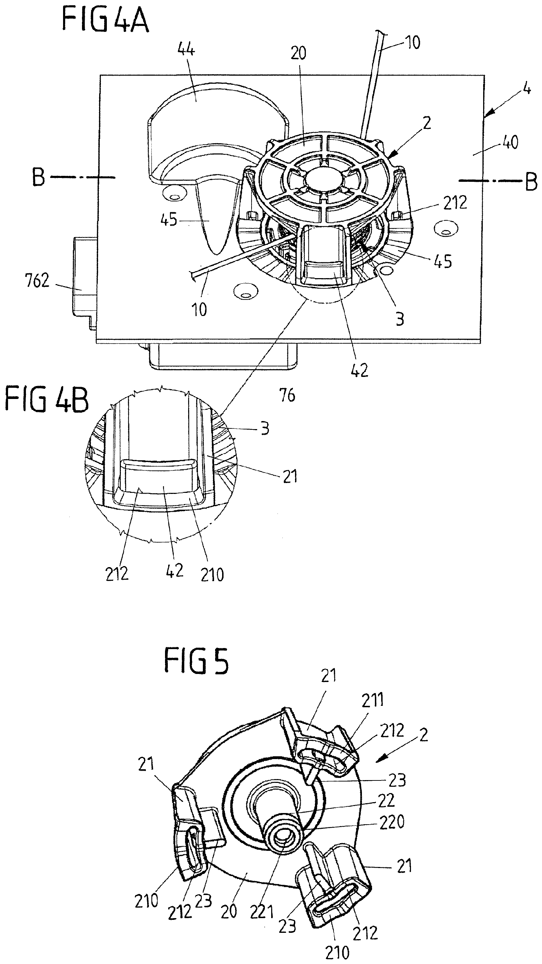

Zur Montage wird das Seilausgangsgehäuse 2 an die erste Seite des Trägerelements 4 angesetzt, sodass das Seilausgangsgehäuse 2 die Seiltrommel 3 einfasst und an dem Trägerelement 4 hält, wie dies in Fig. 2 bis 4A, 4B dargestellt ist. Das Seilausgangsgehäuse 2 kommt hierbei mit seinen radial zum Lagerelement 22 beabstandeten Gehäuseabschnitten 21 über Fußabschnitte 210 in Anlage mit einem Anlagering 45, der eine Öffnung 41 in dem Trägerelement 4 umfänglich umgibt. An dem Anlagering 45 sind axial vorstehende Formschlusselemente 42 in Form von stegförmigen Zapfen ausgebildet, die bei Ansetzen des Seilausgangsgehäuses 2 an das Trägerelement 4 mit Formschlussöffnungen 212 (siehe Fig. 4B) an den Fußabschnitten 210 der Gehäuseabschnitte 21 in Eingriff gelangen und auf diese Weise eine Drehsicherung um die durch das Lagerelement 22 definierte Drehachse D zwischen dem Seilausgangsgehäuse 2 und dem Trägerelement 4 schaffen.

Die stegförmigen Formschlusselemente 42 können an ihren seitlichen Kanten - betrachtet entlang der Umfangsrichtung um das Lagerelement - (unter kleinem Winkel) schräg erstreckt sein, so dass bei Aufstecken der Fußabschnitte 210 auf die Formschlusselemente 42 die Gehäuseabschnitte 21 entlang der Umfangsrichtung spielfrei an den Formschlusselementen 42 festgelegt werden.

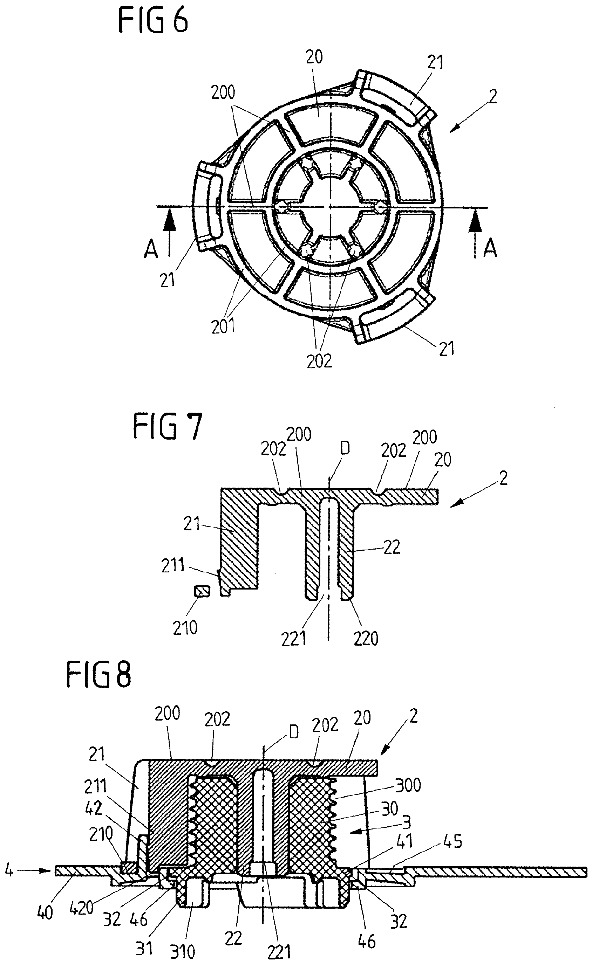

Innenseitig der Formschlusselemente 42 sind Rastausnehmungen 420 geschaffen (siehe zum Beispiel Fig. 1A), in die bei angesetztem Seilausgangsgehäuse 2 Rastelemente 211 in Form von nach außen vorstehenden Rastnasen an den Gehäuseabschnitten 21 eingreifen, wie dies beispielsweise aus einer Zusammenschau von Fig. 6 bis 8 ersichtlich ist. Über diese Rastverbindung wird in einer Vormontagestellung das Seilausgangsgehäuse 2 zusammen mit der darin eingefassten Seiltrommel 3 an dem Trägerelement 4 gehalten, auch wenn das Antriebsgehäuse 7 noch nicht über das Befestigungselement 9 mit dem Seilausgangsgehäuse 2 verspannt ist. Die Rastverbindung vereinfacht somit die Montage und verhindert ein Abfallen des Seilausgangsgehäuses 2 bei noch nicht montiertem Antriebsgehäuse 7.

Die Seiltrommel 3 kommt, in der Vormontagestellung, über radial vorstehende Auflageelemente 32 am oberen Rand des Hohlrads 31 (siehe zum Beispiel Fig. 1A) mit einem Auflagering 46 innerhalb der Öffnung 41 des Trägerelements 4 in Auflage (siehe zum Beispiel Fig. 8), sodass die Seiltrommel 3 in der Vormontagestellung nicht durch die Öffnung 41 hindurchrutschen kann und über das Seilausgangsgehäuse 2 an dem Trägerelement 4 gehalten ist.

Die Auflageelemente 32 dienen insbesondere zur Sicherung der Lage der Seiltrommel 3 an dem Trägerelement 4 in der Vormontagestellung. Nach vollständiger Montage der Antriebsvorrichtung 1 steht die Seiltrommel 3 über das Hohlrad 31 mit dem Antriebsrad 6 in Verbindung und ist axial zwischen dem Seilausgangsgehäuse 2 und dem Antriebsgehäuse 7 festgelegt.

An den Innenseiten der Gehäuseabschnitte 21 sind axial erstreckte und radial nach innen vorspringende Sicherungselemente 23 angeordnet, die der Seilrille 300 an der Mantelfläche des Körpers 30 zugewandt sind und vorzugsweise im Betrieb entlang dieser Mantelfläche gleiten. Über diese Sicherungselemente 23 wird sichergestellt, dass das in der Seilrille 300 aufgenommene Zugseil 10 nicht aus der Seilrille 300 herausspringen kann.

Das Antriebsgehäuse 7 wird an die andere, zweite Seite des Trägerelements 4 angesetzt derart, dass der Motortopf 73 in einer Ausformung 44 in dem Flächenabschnitt 40 und das Schneckengehäuse 74 in einer daran anschließenden Ausformung 440 in dem Flächenabschnitt 40 zu liegen kommt (siehe Fig. 1A, 1B und 2). Bei Ansetzen des Antriebsgehäuses 7 gelangen Befestigungseinrichtungen 71 in Form von Eingriffsbuchsen mit darin eingeformten Formschlussöffnungen 710 mit unterseitig von dem Trägerelement 4 vorstehenden Formschlusselementen 43 in Form von Zapfen in Eingriff. Dadurch, dass die Formschlussöffnungen 710 der Befestigungseinrichtungen 71 genauso wie die Formschlusselemente 43 in Form der Zapfen an dem Trägerelement 4 radial zu der durch das Lagerelement 72 des Antriebsgehäuses 7 geschaffenen Drehachse D beabstandet sind, wird durch diesen formschlüssigen Eingriff das Antriebsgehäuse drehfest an dem Trägerelement 4 festgelegt, sodass eine Drehsicherung für das Antriebsgehäuse 7 bereitgestellt wird.

An den Formschlusselementen 43 des Trägerelements 4 sind Eingriffsabschnitte 51 an einem Dichtring 50 des Dichtelements 5 angeordnet, sodass der formschlüssige Eingriff der Formschlusselemente 43 mit den Formschlussöffnungen 710 an den Befestigungseinrichtungen 71 unter Zwischenlage der Eingriffsabschnitte 51 erfolgt. Dies dient der akustischen Entkopplung.

An dem Dichtelement 5 ist ein gekrümmter Abschnitt 52 ausgebildet, der im Bereich der Ausformung 45 zur Aufnahme des Schneckengehäuses 74 zu liegen kommt. Der gekrümmte Abschnitt 52 bildet eine Zwischenlage zwischen dem Schneckengehäuse 74 und dem Trägerelement 4, sodass auch darüber eine akustische Entkopplung des Antriebsgehäuses 7 von dem Trägerelement 4 erreicht wird.

Ist das Antriebsgehäuse 7 unter Zwischenlage des Dichtelements 5 an das Trägerelement 4 angesetzt worden, so wird das Antriebsgehäuse 7 über das Befestigungselement 9 mit dem Seilausgangsgehäuse 2 verspannt, sodass darüber das Seilausgangsgehäuse 2 und das Antriebsgehäuse 7 zueinander und an dem Trägerelement 4 festgelegt werden. Wie in Fig. 9 dargestellt, wird das Befestigungselement 9 in die Eingriffsöffnung 721 innerhalb des Lagerelements 72 des Antriebsgehäuses 7 eingesetzt, sodass das Befestigungselement 9 mit einem Schaft 90 die Öffnung 720 am Kopf des Lagerelements 72 durchgreift und in die Öffnung 221 des Lagerelements 22 des Seilausgangsgehäuses 2 eingreift. Ein Kopf 91 des Befestigungselements 9 kommt hierbei an der dem Lagerelement 22 abgewandten Seite der Öffnung 720 zu liegen, sodass durch Einschrauben des Befestigungselements 9 in die Öffnung 221 innerhalb des Lagerelements 22 das Seilausgangsgehäuse 2 zu dem Antriebsgehäuse 7 verspannt wird.

Das Seilausgangsgehäuse 2 weist, wie beispielsweise aus Fig. 2 und 6 ersichtlich ist, an seinem Boden 20 an der dem Trägerelement 4 abgewandten Seite Strukturelemente 200, 201 in Form von Versteifungsrippen auf, die sich radial zu der durch das Lagerelement 22 geschaffenen Drehachse D bzw. umfänglich um die Drehachse D erstrecken und den Boden 20 versteifen. In den radial erstreckten Strukturelementen 200 sind hierbei lokal Aussparungen 202 zur Materialschwächung an den Strukturelementen 200 geschaffen, die entlang eines Rings um die Drehachse D angeordnet sind und eine Sollverformungslinie zur elastischen Verformung des Bodens 20 schaffen.

Wird das Befestigungselement 9 von Seiten des Antriebsgehäuses 7 in das Lagerelement 22 eingeschraubt, so kann sich der Boden 20 zumindest geringfügig verformen, sodass herstellungsbedingte Toleranzen ausgeglichen werden können und das Seilausgangsgehäuse 2 über die Fußabschnitte 210 an den Gehäuseabschnitten 21 spielfrei an dem Trägerelement 4 festgelegt wird.

An einem dem Boden 20 abgewandten Ende weist das Lagerelement 22 zudem einen konischen Abschnitt 220 in Form eines Zentrierkonus auf (siehe Fig. 8 und 9), der bei Verspannen des Seilausgangsgehäuses 2 zu dem Antriebsgehäuse 7 mit einem komplementär geformten Zentriereingriff an dem Lagerelement 72 des Antriebsgehäuses 7 in Eingriff gelangt und auf diese Weise eine zentrierte Lage des Lagerelements 22 des Seilausgangsgehäuses 2 zu dem Lagerelement 72 des Antriebsgehäuses 7 einstellt. Sowohl der konische Abschnitt 220 am Ende des Lagerelements 22 als auch der Zentriereingriff 722 am Kopf des Lagerelements 72 sind konisch geformt und dabei komplementär zueinander, sodass bei einem Eingriff das Lagerelement 22 des Seilausgangsgehäuses 2 in zentrierter Weise zu dem Lagerelement 72 des Antriebsgehäuses 7 ausgerichtet wird.

Das Lagerelement 22 des Seilausgangsgehäuses 2 und das Lagerelement 72 des Antriebsgehäuses 7 schaffen hierbei eine gemeinsame Drehachse D für die Seiltrommel 3 einerseits und das Antriebsrad 6 andererseits, sodass die Seiltrommel 3 und das Antriebsrad 6 sich im Betrieb koaxial zueinander und gemeinsam miteinander verdrehen können.

Eine Antriebsvorrichtung der beschriebenen Art ist insbesondere nicht beschränkt auf den Einsatz an einem Fensterheber, sondern kann auch zum Verstellen eines anderen Verstellelements, beispielsweise eines Schiebedachs oder dergleichen, in einem Fahrzeug dienen.

Die Antriebsvorrichtung kann in einfacher Weise insbesondere unter Verwendung eines (einzigen) axial verspannenden Befestigungselements montiert werden. Es ergibt sich eine Montage in wenigen Montageschritten, die einfach und günstig bei zuverlässiger Festlegung des Seilausgangsgehäuses und des Antriebsgehäuses an dem Trägerelement sein kann.

### Bezugszeichenliste

- 1: Antriebsvorrichtung
- 10: Seil
- 11: Führungsschiene
- 110, 111: Umlenkung
- 12: Mitnehmer
- 13: Fensterscheibe
- 2: Seilausgangsgehäuse
- 20: Boden
- 200, 201: Strukturelement (Versteifungsrippe)
- 202: Aussparung (Materialschwächung)
- 21: Gehäuseabschnitt
- 210: Fußabschnitt
- 211: Rastelement
- 212: Formschlussöffnung (Schlitzöffnung)
- 22: Lagerelement (Lagerdom)
- 220: Zentrierkonus
- 221: Öffnung
- 23: Sicherungselement
- 3: Seiltrommel
- 30: Körper
- 300: Seilrille
- 31: Hohlrad
- 310: Verzahnung
- 32: Auflageelement
- 4: Trägerelement (Aggregateträger)
- 40: Flächenabschnitt
- 41: Öffnung
- 42: Formschlusselement
- 420: Rastausnehmung
- 43: Formschlusselement
- 44: Ausformung
- 440: Ausformung
- 45: Anlagering
- 46: Gegenauflage (Auflagering)
- 5: Dichtelement
- 50: Dichtring
- 51: Eingriffsabschnitt
- 52: Gekrümmter Abschnitt
- 6: Antriebsrad
- 60: Körper
- 600: Außenverzahnung
- 61: Verbindungsrad
- 610: Verzahnung
- 62: Öffnung
- 7: Antriebsgehäuse
- 70: Gehäusetopf
- 71: Befestigungseinrichtung (Eingriffsbuchse)
- 710: Formschlussöffnung
- 72: Lagerelement (Lagerdom)
- 720: Öffnung
- 721: Eingriffsöffnung
- 722: Zentriereingriff
- 73: Motortopf
- 74: Schneckengehäuse
- 75: Gehäusedeckel
- 76: Elektronikgehäuse
- 760: Platine
- 761: Gehäuseplatte
- 762: Steckverbinder
- 8: Motoreinheit
- 80: Elektromotor
- 800: Antriebswelle
- 81: Antriebsschnecke
- 82: Lager
- 9: Befestigungselement
- 90: Schaft
- 91: Kopf
- D: Drehachse
- X1, X2, X3: Spiel

## Patentansprüche

1. Antriebsvorrichtung (1) für eine Verstelleinrichtung zum Verstellen eines Fahrzeugteils, insbesondere eines Fensterhebers, mit
- einem Trägerelement (4), das eine Öffnung (41) aufweist,
- einer Seiltrommel (3), die mit einem Abschnitt (31) in die Öffnung (41) des Trägerelements (4) derart eingesetzt ist, dass sich der Abschnitt (31) zumindest teilweise durch die Öffnung (41) hindurch erstreckt,
- einem an einer ersten Seite des Trägerelements (4) angeordneten Seilausgangsgehäuse (2), das ein die Seiltrommel (3) um eine Drehachse (D) drehbar an der ersten Seite des Trägerelements (4) lagerndes Lagerelement (22) aufweist,
- einem durch eine Motoreinheit (8) antreibbaren Antriebsrad (6) und
- einem an einer von der ersten Seite abgewandten, zweiten Seite des Trägerelements (4) angeordneten Antriebsgehäuse (7), das ein weiteres, zweites Lagerelement (72) zum drehbaren Lagern des Antriebsrads (6) um die Drehachse (D) aufweist,
wobei das Lagerelement (22) des Seilausgangsgehäuses (2) als zylindrischer Lagerdom, der von einem Boden (20) des Seilausgangsgehäuses (2) vorsteht, ausgebildet ist und der Abschnitt (31) der Seiltrommel (3) durch ein Hohlrad gebildet ist, über das die Seiltrommel (3) drehfest mit dem Antriebsrad (6) verbunden ist,
**dadurch gekennzeichnet, dass**
an dem Abschnitt (31) der Seiltrommel (3) zumindest ein radial zur Drehachse (D) von dem Abschnitt (31) vorspringendes Auflageelement (32) angeordnet ist, das eine Gegenauflage (46) an einem die Öffnung (41) des Trägerelements (4) umgebenden Rand des Trägerelements (4) radial derart übergreift, dass die Gegenauflage (46) ein Hindurchbewegen der Seiltrommel (3) durch die Öffnung (41) des Trägerelements (4) sperrt,
und dass die Seiltrommel (3) eine Mehrzahl von umfänglich an dem Abschnitt (31) zueinander beabstandeten Auflageelementen (32) aufweist.

2. Antriebsvorrichtung (1) nach Anspruch 1, **dadurch gekennzeichnet, dass** die Gegenauflage (46) durch einen die Öffnung (41) des Trägerelements (4) umgebenden Auflagering (46) gebildet ist.

3. Antriebsvorrichtung (1) nach Anspruch 1 oder 2, **dadurch gekennzeichnet, dass** das Seilausgangsgehäuse (2) mit dem Trägerelement (4) über eine Rastverbindung formschlüssig verbunden ist.

4. Antriebsvorrichtung (1) nach einem der vorangehenden Ansprüche, **dadurch gekennzeichnet, dass** das Seilausgangsgehäuse (2) zumindest einen radial zur Drehachse (D) beabstandeten Gehäuseabschnitt (21) aufweist, der derart an dem Trägerelement (4) festgelegt ist, dass das Seilausgangsgehäuse (2) zur Drehachse (D) drehfest an dem Trägerelement (4) gehalten ist.

5. Antriebsvorrichtung (1) nach Anspruch 4, **dadurch gekennzeichnet, dass** der Gehäuseabschnitt (21) einen Fußabschnitt (210) aufweist, der an das Trägerelement (4) angesetzt ist, wobei ein Formschlusselement (42) an dem Fußabschnitt (210) oder dem Trägerelement (4) in eine Formschlussöffnung (212) an dem jeweils anderen Bauteil formschlüssig eingreift.

6. Antriebsvorrichtung (1) nach Anspruch 5, **dadurch gekennzeichnet, dass** das Formschlusselement (42) rastend in die Formschlussöffnung (212) eingreift.

7. Antriebsvorrichtung (1) nach einem der vorangehenden Ansprüche, **dadurch gekennzeichnet, dass** das Seilausgangsgehäuse (2) und das Antriebsgehäuse (7) über ein zwischen dem Lagerelement (22) des Seilausgangsgehäuses (2) und dem weiteren, zweiten Lagerelement (72) des Antriebsgehäuses (7) wirkendes Befestigungselement (9) aneinander befestigt sind.

8. Antriebsvorrichtung (1) nach Anspruch 7, **dadurch gekennzeichnet, dass** das Befestigungselement (9) durch ein Schraubelement ausgebildet ist, das das Seilausgangsgehäuse (2) und das Antriebsgehäuse (7) axial entlang der Drehachse (D) zueinander verspannt.

9. Antriebsvorrichtung (1) nach einem der vorangehenden Ansprüche, **dadurch gekennzeichnet, dass** das Antriebsgehäuse (7) zumindest eine radial zum zweiten Lagerelement (72) beabstandete Befestigungseinrichtung (71) aufweist, über die das Antriebsgehäuse (7) derart an dem Trägerelement (4) festgelegt ist, dass das Antriebsgehäuse (7) zur Drehachse (D) drehfest an dem Trägerelement (4) gehalten ist.

10. Antriebsvorrichtung (1) nach Anspruch 9, **dadurch gekennzeichnet, dass** ein Formschlusselement (43) an dem Trägerelement (4) oder der Befestigungseinrichtung (71) in eine Formschlussöffnung (710) an dem jeweils anderen Bauteil formschlüssig eingreift.

## Claims

1. A drive device (1) for an adjustment installation for adjusting a vehicle part, in particular a power window actuator, having
- a carrier element (4) which has an opening (41);
- a cable drum (3) which by way of a portion (31) is inserted into the opening (41) of the carrier element (4) in such a manner that the portion (31) at least partially extends through the opening (41);
- a cable exit housing (2) which is disposed on a first side of the carrier element (4) and which has a bearing element (22) which on the first side of the carrier element (4) mounts the cable drum (3) so to be rotatable about a rotation axis (D);
- a drive wheel (7) that is drivable by a motor unit (8) and
- a drive housing (7) which is disposed on a second side, facing away from the first side, of the carrier element (4) and which has a further, second bearing element (72) for mounting the drive wheel (6) so as to be rotatable about the rotation axis (D),
wherein the bearing element (22) of the cable exit housing (2) is configured as a cylindrical bearing dome which projects from a base (20) of the cable exit housing (2) and the portion (31) of the cable drum (3) is formed by a ring gear by way of which the cable drum (3) is connected in a rotationally fixed manner to the drive wheel (7),
**characterized in that**
at least one bearing element (32) which projects radially to the rotation axis (D) from the portion (31) is disposed on the portion (31) of the cable drum (3), said bearing element (32) engaging radially across a counter bearing (46) on a periphery of the carrier element (4) surrounding the opening (41) of the carrier element (4) in such a manner that the counter bearing (46) blocks a movement of the cable drum (3) through the opening (41) of the carrier element (4), and the cable drum (3) has a plurality of bearing elements (32) that are mutually spaced apart circumferentially on the portion (31).

2. The drive device (1) as claimed in claim 1, **characterized in that** the counter bearing (46) is formed by a bearing ring (46) that surrounds the opening (41) of the carrier element (4).

3. The drive device (1) as claimed in claim 1 or 2, **characterized in that** the cable exit housing (2) is connected in a positive-locking manner to the carrier element (4) by way of a latch-fit connection.

4. The drive device (1) as claimed in one of the preceding claims, **characterized in that** the cable exit housing (2) has at least one housing portion (21) that is radially spaced apart from the rotation axis (D) and which is established on the carrier element (4) in such a manner that the cable exit housing (2) is held on the carrier element (4) so as to be rotationally fixed in relation to the rotation axis (D).

5. The drive device (1) as claimed in claim 4, **characterized in that** the housing portion (21) has a base portion (210) which is attached to the carrier element (4), wherein a positive-lock element (42) on the base portion (210) or the carrier element (4) engages in a positive-locking manner in a positive-lock opening (212) on the respective other component.

6. The drive device (1) as claimed in claim 5, **characterized in that** the positive-lock element (42) engages in a latching manner in the positive-lock opening (212).

7. The drive device (1) as claimed in one of the preceding claims, **characterized in that** the cable exit housing (2) and the drive housing (7) are fastened to one another by way of a fastening element (9) that acts between the bearing element (22) of the cable exit housing (2) and the further, second bearing element (72) of the drive housing (7).

8. The drive device (1) as claimed in claim 7, **characterized in that** the fastening element (9) is configured by a screw element which mutually braces the cable exit housing (2) and the drive housing (7) axially along the rotation axis (D).

9. The drive device (1) as claimed in one of the preceding claims, **characterized in that** the drive housing (7) has at least one fastening installation (71) which is radially spaced apart from the second bearing element (72) and by way of which the drive housing (7) is established on the carrier element (4) in such a manner that the drive housing (7) is held on the carrier element (4) so as to be rotationally fixed in relation to the rotation axis (D).

10. The drive device (1) as claimed in claim 9, **characterized in that** a positive-lock element (43) on the carrier element (4) or the fastening installation (71) engages in a positive-lock opening (710) on the respective other component.

## Revendications

1. Dispositif d'entraînement (1) pour un système d'ajustement pour ajuster une partie de véhicule, en particulier un lève-vitre, avec
- un élément porteur (4), qui présente une ouverture (41),
- un tambour de câble (3), qui est inséré par une section (31) dans l'ouverture (41) de l'élément porteur (4) de telle manière que la section (31) s'étend au moins en partie à travers l'ouverture (41) de part en part,
- un boîtier de sortie de câble (2) disposé sur un premier côté de l'élément porteur (4), qui présente un élément de support (22) supportant le tambour de câble (3) de manière à pouvoir tourner autour d'un axe de rotation (D) sur le premier côté de l'élément porteur (4),
- une roue d'entraînement (6) pouvant être entraînée par une unité formant moteur (8), et
- un boîtier d'entraînement (7) disposé sur un deuxième côté, opposé au premier côté, de l'élément porteur (4), qui présente un autre deuxième élément de support (72) pour supporter de manière à pouvoir tourner la roue d'entraînement (6) autour de l'axe de rotation (D),
dans lequel l'élément de support (22) du boîtier de sortie de câble (2) est réalisé en tant qu'un dôme de support cylindrique, qui fait saillie d'un fond (20) du boîtier de sortie de câble (2), et la section (31) du tambour de câble (3) est formée par une couronne, par l'intermédiaire de laquelle le tambour de câble (3) est relié de manière solidaire en rotation à la roue d'entraînement (6),
**caractérisé en ce que**
est disposé sur la section (31) du tambour de câble (3) au moins un élément d'appui (32) faisant saillie de la section (31) radialement par rapport à l'axe de rotation (D), qui surmonte radialement un contre-appui (46) sur un bord, entourant l'ouverture (41) de l'élément porteur (4), de l'élément porteur (4) de telle manière que le contre-appui (46) bloque un déplacement du tambour de câble (3) à travers l'ouverture (41) de part en part de l'élément porteur (4),
et que
le tambour à câble (3) présente une multitude d'éléments d'appui (32) tenus à distance les uns par rapport aux autres en périphérie que la section (31).

2. Dispositif d'entraînement (1) selon la revendication 1, **caractérisé en ce que** le contre-appui (46) est formé par un anneau d'appui (46) entourant l'ouverture (41) de l'élément porteur (4).

3. Dispositif d'entraînement (1) selon la revendication 1 ou 2, **caractérisé en ce que** le boîtier de sortie de câble (2) est relié par complémentarité de forme à l'élément porteur (4) par l'intermédiaire d'une liaison par enclenchement.

4. Dispositif d'entraînement (1) selon l'une quelconque des revendications précédentes, **caractérisé en ce que** le boîtier de sortie de câble (2) présente au moins une section de boîtier (21) tenue à distance radialement par rapport à l'axe de rotation (D), qui est fixée de telle manière sur l'élément porteur (4) que le boîtier de sortie de câble (2) est maintenu de manière solidaire en rotation sur l'élément porteur (4) par rapport à l'axe de rotation (D).

5. Dispositif d'entraînement (1) selon la revendication 4, **caractérisé en ce que** la section de boîtier (21) présente une section de pied (210), qui est placée sur l'élément porteur (4), dans lequel un élément à complémentarité de forme (42) sur la section de pied (210) ou l'élément porteur (4) vient en prise par complémentarité de forme avec une ouverture à complémentarité de forme (212) sur l'autre composant respectivement.

6. Dispositif d'entraînement (1) selon la revendication 5, **caractérisé en ce que** l'élément à complémentarité de forme (42) vient en prise par enclenchement avec l'ouverture à complémentarité de forme (212).

7. Dispositif d'entraînement (1) selon l'une quelconque des revendications précédentes, **caractérisé en ce que** le boîtier de sortie de câble (2) et le boîtier d'entraînement (7) sont fixés l'un sur l'autre par l'intermédiaire d'un élément de fixation (9) agissant entre l'élément de support (22) du boîtier de sortie de câble (2) et l'autre deuxième élément de support (72) du boîtier d'entraînement (7).

8. Dispositif d'entraînement (1) selon la revendication 7, **caractérisé en ce que** l'élément de fixation (9) est réalisé par un élément de vissage, qui assemble par serrage le boîtier de sortie de câble (2) et le boîtier d'entraînement (7) l'un par rapport à l'autre de manière axiale le long de l'axe de rotation (D).

9. Dispositif d'entraînement (1) selon l'une quelconque des revendications précédentes, **caractérisé en ce que** le boîtier d'entraînement (7) présente au moins un système de fixation (71) tenu à distance radialement par rapport au deuxième élément de support (72), par l'intermédiaire duquel le boîtier d'entraînement (7) est immobilisé de telle manière sur l'élément porteur (4) que le boîtier d'entraînement (7) est maintenu par rapport à l'axe de rotation (D) de manière solidaire en rotation sur l'élément porteur (4).

10. Dispositif d'entraînement (1) selon la revendication 9, **caractérisé en ce qu'**un élément à complémentarité de forme (43) sur l'élément porteur (4) ou le système de fixation (71) vient en prise par complémentarité de forme avec une ouverture à complémentarité de forme (710) sur l'autre composant respectivement.
